# FASCICULE DE BREVET EUROPEEN

(11) **EP 0 769 032 B1**
(45) Date de publication et mention de la délivrance du brevet: **13.05.1998**
(21) Numéro de dépôt: 95925673.6
(22) Date de dépôt: 04.07.1995
(51) Int. Cl.: C08J 5/22, B01D 61/44, B32B 31/00

(54) **MEMBRANE BIPOLAIRE ET PROCEDE DE FABRICATION D'UNE MEMBRANE BIPOLAIRE**
BIPOLARE MEMBRAN UND VERFAHREN ZU IHRER HERSTELLUNG
BIPOLAR MEMBRANE AND METHOD FOR FABRICATING SUCH BIPOLAR MEMBRANE

(30) Priorité: 05.07.1994 BE 9400630
(43) Date de publication de la demande: 23.04.1997
(73) Titulaire: SOLVAY (Société Anonyme), B-1050 Bruxelles (BE); ELECTRICITE DE FRANCE, 75008 Paris (FR)
(72) Inventeur: HURWITZ, Heinz, B-1640 Rhode-Saint-Genèse (BE); EL MOUSSAOUI, Rachid, B-1070 Bruxelles (BE)
(74) Mandataire: Van Malderen, Michel
(86) Numéro de dépôt international: BE9500064
(87) Numéro de publication internationale: WO9601286

(56) Documents cités:
- EP-A- 0 600 470
- WO-A-89/01059
- WO-A-94/19399
- GB-A- 2 122 543
- ELECTROCHIMICA ACTA, vol. 31, no. 9, OXFORD GB, pages 1175-1176, R. SIMONS 'A NOVEL METHOD FOR PREPARING BIPOLAR MEMBRANES'

## Description

L'invention concerne une membrane bipolaire utilisable pour l'électrodialyse d'électrolytes aqueux.

Les membranes bipolaires sont des éléments constitutifs des cellules d'électrodialyse. Ces dernières sont bien connues en technique où elles sont notamment utilisées pour la fabrication d'acides et de bases au départ de leurs sels. Dans ces procédés d'électrodialyse, les membranes bipolaires sont immergées dans des électrolytes aqueux et elles sont le siège d'une dissociation de l'eau sous l'action d'un champs électrique. On cherche généralement à réduire la tension électrique nécessaire à la dissociation de l'eau dans la membrane bipolaire.

Dans des procédés généralement utilisés pour fabriquer des membranes bipolaires, on juxtapose une membrane échangeuse d'ions cationique et une membrane échangeuse d'ions anionique, qui ont au préalable subi un conditionnement. A cet effet, dans la demande de brevet britannique 2122543, on décrit des membranes bipolaires obtenues en juxtaposant une membrane échangeuse d'ions cationique et une membrane échangeuse d'ions anionique, qui ont subi un traitement de conditionnement de telle sorte qu'elles présentent, le long de leur surface commune jointive, une zone interne contenant des cations métalliques et des anions sélectionnés notamment parmi les anions tétraborate, métaborate, silicate, métasilicate, tungstate, chlorate, phosphate, sulfate, chromate, hydroxyl, carbonate, molybdate, chloroplatinate, chloropaladate, orthovanadate et tellurate. Pour le traitement de conditionnement, on cite spécifiquement le traitement des membranes échangeuses d'ions avec des solutions aqueuses de sulfate d'indium, de sulfate de sodium, de sulfate de cérium, de sulfate de cuivre, de sulfate de manganèse, de chlorure de chrome, de chlorure de ruthénium et de chlorure de rhodium. Dans la demande internationale WO 89/01059, on décrit un procédé de fabrication d'une membrane bipolaire, selon lequel on traite une membrane échangeuse d'ions cationique et une membrane échangeuse d'ions anionique séparément avec une solution alcaline d'un sel d'un métal autre que le sodium ou le potassium, on juxtapose ensuite les deux membranes échangeuses d'ions, puis on traite l'assemblage ainsi obtenu avec une solution aqueuse alcaline. Dans ce procédé connu, la solution alcaline utilisée est une solution d'hydroxyde de sodium et le sel métallique est généralement un chlorure métallique. On cite le sulfate cérique.

Les membranes bipolaires obtenues au moyen des procédés connus prédécrits se caractérisent généralement par une bonne cohésion mécanique, une résistance électrique modérée et une tension électrique modérée pour la dissociation de l'eau.

L'invention a pour objectif de fournir des membranes bipolaires de performances améliorées par rapport à celles des membranes obtenues au moyen des procédés connus prédécrits, en particulier des membranes bipolaires présentant une faible tension de dissociation de l'eau.

En conséquence, l'invention concerne une membrane bipolaire utilisable pour l'électrodialyse d'électrolytes aqueux, comprenant deux membranes échangeuses d'ions, respectivement anionique et cationique, qui sont juxtaposées le long d'une surface commune, la membrane bipolaire se caractérisant en ce qu'elle comprend, le long de la surface commune susdite, un gel à base de sulfate et/ou sulfite métallique hydraté, contenant moins de 0,01% de gel de sulfate d'indium, de cérium, de manganèse ou de cuivre.

La membrane bipolaire selon l'invention comprend une membrane échangeuse d'ions anionique et une membrane échangeuse d'ions cationique. On entend désigner par membrane échangeuse d'ions anionique, une feuille mince, non poreuse, sélectivement perméable aux anions et imperméable aux cations. Une membrane échangeuse d'ions cationique est une feuille mince, non poreuse, sélectivement perméable aux cations et imperméable aux anions. Par la suite, la membrane échangeuse d'ions anionique sera désignée membrane anionique et la membrane échangeuse d'ions cationique sera dénommée membrane cationique. Dans la membrane bipolaire selon l'invention, les membranes échangeuses d'ions doivent être en une matière inerte vis-à-vis des solutions aqueuses acides ou basiques. Des membranes cationiques utilisables dans la membrane bipolaire selon l'invention sont par exemple des feuilles en polymère fluoré contenant des groupements fonctionnels dérivés d'acides sulfoniques, d'acides carboxyliques ou d'acides phosphoniques ou des mélanges de tels groupements fonctionnels, ces groupements jouant le rôle de sites cationiques fixes de la membrane. Des membranes cationiques de ce type, utilisables dans la membrane bipolaire selon l'invention, sont celles connues sous le nom RAIPORE (PALL RAI) et sous la marque MORGANE (SOLVAY), en particulier les membranes RAIPORE R-4010, MORGANE CDS et MORGANE CRA. Des membranes anioniques utilisables dans la membrane bipolaire selon l'invention sont constituées de feuilles en un matériau polymérique inerte vis-à-vis des solutions aqueuses acides ou basiques et comprenant des groupements d'ammonium quaternaire jouant le rôle de sites anioniques fixes. Des membranes anioniques utilisables dans la membrane bipolaire selon l'invention sont les membranes RAIPORE R-1030, RAIPORE R-4030 et MORGANE ADP.

L'épaisseur des membranes échangeuses d'ions va conditionner les propriétés mécaniques et électrochimiques de la membrane bipolaire selon l'invention. L'épaisseur optimum des membranes échangeuses d'ions va résulter d'un compromis entre une résistance mécanique suffisante (propriété favorisée par les grandes épaisseurs) et une faible résistance électrique transversale (propriété favorisée par les faibles épaisseurs). En pratique, l'épaisseur des membranes échangeuses d'ions est généralement supérieure à 10 µm, de préférence au moins égale à 20 µm. Elle est généralement inférieure à 250 µm et excède rarement 200 µm, les épaisseurs les plus adéquates étant généralement de 30 à 150 µm.

Dans la membrane bipolaire selon l'invention, la membrane anionique et la membrane cationique sont juxtaposées, de sorte qu'elles sont en contact l'une avec l'autre sensiblement sur toute la superficie d'une surface commune. Conformément à l'invention, la membrane bipolaire comprend, le long de cette surface commune, un gel à base de sulfate et/ou sulfite métallique hydraté. L'expression "sulfate et/ou sulfite métallique" désigne tout sel métallique dérivé de l'acide sulfurique ou de l'acide sulfureux. L'expression "gel à base de sulfate et/ou sulfite métallique hydraté" signifie que le gel est formé à partir de sulfate et/ou de sulfite métallique et qu'il peut comprendre des anions autres que des anions sulfate et des anions sulfite, par exemple, en général, des anions hydroxyle. Dans la membrane bipolaire selon l'invention, le gel constitue un milieu hydrophile et électroconducteur le long de la surface commune de jonction des deux membranes échangeuses d'ions. Bien que ne souhaitant pas être liés par une explication théorique, les inventeurs pensent que ce gel favorise la dissociation des molécules d'eau lorsque la membrane bipolaire est utilisée dans les procédés d'électrodialyse définis plus haut. Le gel doit dès lors être en contact avec les deux membranes échangeuses d'ions le long d'une partie au moins de la surface commune de jonction précitée, cette partie représentant généralement au moins 25 (de préférence au moins 50) % de ladite surface commune de jonction. Il peut être entièrement situé dans une seule des deux membranes échangeuses d'ions, à l'exclusion de l'autre, ou bien chevaucher la surface commune précitée et appartenir simultanément aux deux membranes échangeuses d'ions. De manière préférée, le gel est situé au moins partiellement (par exemple à raison d'au moins 50 %) dans la membrane échangeuse d'ions anionique. En pratique, le gel s'étend sur une partie seulement de l'épaisseur de la ou de chaque membrane échangeuse d'ions, ladite partie représentant par exemple quelques pour cent de l'épaisseur totale de ladite membrane échangeuse d'ions. Les propriétés de la membrane bipolaire selon l'invention vont dépendre de la qualité du gel et, en particulier, de sa capacité d'absorption de l'eau et de sa conductivité électrique. Les gels de sulfate d'indium, de sulfate de cérium, de sulfate de manganèse et de sulfate de cuivre sont exclus de l'invention. On entend par cette expression que le gel à base de sulfate et/ou sulfite métallique hydraté peut éventuellement contenir du gel de sulfate d'indium, du gel de sulfate de cérium, du gel de sulfate de manganèse, ou du gel de sulfate de cuivre, mais à l'état de traces, pour lesquelles ils n'exercent pas d'influence sensible sur la tension de dissociation de l'eau dans la membrane bipolaire, toutes autres choses restant égales. En pratique, le gel à base de sulfate et/ou sulfite métallique hydraté de la membrane bipolaire selon l'invention doit contenir moins de 0,01 % molaire de gel de sulfate d'indium, de cérium, de manganèse ou de cuivre. Il en est de préférence exempt.

Dans la membrane bipolaire selon l'invention, le sulfate et/ou sulfite métallique peut comprendre un métal unique ou plusieurs métaux différents.

Dans une forme de réalisation préférée de la membrane bipolaire selon l'invention, le sulfate et/ou sulfite métallique est du monosulfate et/ou monosulfite métallique [respectivement de formules générales M(SO₄)n/2 et M(SO₃)n/2 où M désigne un métal et n désigne la valence du métal M], par opposition notamment aux hydrogénosulfates, hydrogénosulfites, pyrosulfates et pyrosulfites métalliques. Dans cette forme de réalisation de l'invention, le gel peut être à base de monosulfate métallique, ou à base de monosulfite métallique. En variante, il peut comprendre un mélange de monosulfate et de monosulfite métallique. On préfère que le gel soit essentiellement à base de monosulfate métallique.

Dans une autre forme de réalisation préférée de la membrane bipolaire selon l'invention, le sulfate et/ou sulfite métallique du gel comprend du sulfate et/ou sulfite de métal polyvalent, de préférence du sulfate et/ou sulfite de chrome. Le sulfate et le sulfite de chrome trivalent Cr³⁺ se sont révélés spécialement avantageux. Selon une variante recommandée de cette forme de réalisation de l'invention, le gel comprend un mélange de sulfate et/ou sulfite de chrome trivalent et de sulfate et/ou sulfite de métal alcalino-terreux (de préférence de magnésium ou de calcium). Dans cette variante de l'invention, le sulfate et/ou sulfite de métal alcalino-terreux se trouve en une quantité molaire minoritaire par rapport au sulfate et/ou sulfite de chrome trivalent, généralement en une quantité molaire au moins égale à 0,001 % (de préférence à 0,01 %), mais inférieure à 10 % (de préférence à 5 %) molaire de la quantité de sulfate et/ou suflite de chrome trivalent. Dans cette variante de l'invention, le monosulfate de chrome trivalent et les mélanges de monosulfate de chrome trivalent et de monosulfate de métal alcalino-terreux sont préférés.

L'invention concerne aussi un procédé de fabrication d'une membrane bipolaire conforme à l'invention, telle que définie plus haut, selon lequel on met en oeuvre deux membranes échangeuses d'ions, respectivement anionique et cationique, on traite une au moins des membranes échangeuses d'ions avec des cations métalliques, puis on juxtapose les deux membranes échangeuses d'ions le long d'une surface commune de jonction, le traitement de la membrane échangeuse d'ions avec les cations métalliques comprenant la formation d'un gel à base de sulfate et/ou sulfite métallique hydraté le long d'une partie au moins de la surface commune de jonction précitée, contenant moins de 0,01% de gel de sulfate d'indium, de cérium, de manganèse ou de cuivre.

Dans le procédé selon l'invention, les membranes échangeuses d'ions mises en oeuvre ont été définies plus haut et les cations métalliques sont des cations des métaux qui ont été définis plus haut, en référence à la membrane bipolaire selon l'invention.

Dans le procédé selon l'invention, le gel à base de sulfate et/ou sulfite métallique hydraté peut être obtenu par tout moyen connu adéquat. Un moyen spécialement recommandé consiste à d'abord former un précipité de sulfate et/ou sulfite métallique que l'on convertit ensuite en gel hydraté.

A cet effet, selon une première forme d'exécution du procédé suivant l'invention, on traite la membrane échangeuse d'ions successivement avec une solution aqueuse comprenant les cations métalliques précités et avec une solution aqueuse comprenant des anions sulfate et/ou sulfite, de manière à obtenir le précipité de sulfate et/ou sulfite métallique et on soumet ensuite le précipité à une maturation dans la solution aqueuse d'anions sulfate et/ou sulfite. Dans cette forme d'exécution de l'invention, les cations métalliques doivent être sélectionnés parmi ceux qui forment des composés insolubles avec les anions sulfate et/ou sulfite, comme c'est le cas de certains composés avec les cations Cr³⁺, et ils sont mis en oeuvre à l'état de sels hydrosolubles. Les sels hydrosolubles inorganiques sont préférés, en particulier les sels métalliques hydratés, tels que, par exemple. les chlorures et les nitrates. Les nitrates conviennent bien et, parmi ceux-ci, le nitrate chromique est spécialement recommandé. On utilise avantageusement du nitrate chromique hydraté, le nitrate chromique nonahydraté étant préféré. L'indium, le cérium. le manganèse et le cuivre sont exclus de l'invention. On entend par cette expression que des cations d'indium, de cérium, de manganèse ou de cuivre peuvent éventuellement être mis en oeuvre, mais en quantités suffisamment faibles pour que le gel de sulfate et/ou sulfite d'indium, de cérium, de manganèse ou de cuivre qui viendrait à se former soit seulement à l'état de traces dans le gel de sulfate et/ou sulfite métallique hydraté, selon la définition donnée plus haut. La concentration de la solution aqueuse de cations métalliques n'est pas critique, les solutions concentrées étant toutefois préférées. En pratique, on recommande d'utiliser des solutions aqueuses dont la concentration en cations métalliques est au moins égale à 0,1 (de préférence à 0,5) mole/l. La concentration maximum admissible de la solution aqueuse de cations métalliques est celle qui correspond à la saturation et elle dépend dès lors de divers paramètres, notamment des cations métalliques sélectionnés, du composé hydrosoluble mis en oeuvre pour apporter les cations métalliques et de la température de la solution. On préfère mettre la solution en oeuvre à une température voisine de la température ambiante, par exemple de 15 à 35 °C. La solution aqueuse d'anions sulfate et/ou sulfite peut être une solution d'acide sulfurique ou sulfureux ou une solution de sulfate et/ou sulfite métallique hydrosoluble. On préfère mettre en oeuvre une solution aqueuse de sulfate ou de sulfite métallique, de préférence de sulfate ou de sulfite de métal alcalin, le sulfate de sodium et le sulfite de sodium étant spécialement avantageux. La concentration de la solution aqueuse d'anions sulfate et/ou sulfite n'est pas critique, les solutions concentrées étant toutefois préférées. En pratique, on recommande d'utiliser des solutions aqueuses dont la concentration en anions sulfate et/ou sulfite est au moins égale à 0,1 (de préférence à 0,5) mole/l. La concentration maximum admissible de la solution aqueuse d'anions sulfate et/ou sulfite est celle qui correspond à la saturation et elle dépend dès lors de divers paramètres, notamment du composé mis en oeuvre pour apporter les anions sulfate et/ou sulfite et de la température de la solution. On préfère utiliser une solution saturée ou proche de la saturation à la température de traitement de la membrane anionique. Le traitement de la membrane échangeuse d'ions avec la solution aqueuse d'anions sulfate et/ou sulfite est effectué à une température au moins égale et, de préférence, supérieure à la température ambiante, les températures au moins égales à 50 °C étant recommandées. En principe, la température maximum admissible pour le traitement avec la solution aqueuse d'anions sulfate et/ou sulfite est définie par la température d'ébullition de la solution et par la nécessité d'éviter une détérioration thermique des propriétés de la membrane traitée. En pratique, les meilleurs résultats sont obtenus aux températures de 65 à 85 °C. Le traitement de la membrane échangeuse d'ions avec la solution aqueuse d'anions sulfate et/ou sulfite est suivi d'un traitement de maturation de cette membrane dans la solution aqueuse d'anions sulfate et/ou sulfite.

La membrane échangeuse d'ions que l'on traite avec la solution aqueuse de cations métalliques et avec la solution aqueuse d'anions sulfate et/ou sulfite peut être indifféremment la membrane cationique ou la membrane anionique. On préfère que les deux membranes échangeuses d'ions soient traitées avec ces deux solutions. Dans le cas où une seule des deux membranes échangeuses d'ions est traitée avec ces deux solutions, celle-ci est de préférence la membrane anionique. Les traitements successifs de la ou de chaque membrane échangeuse d'ions avec la solution de cations métalliques et avec la solution d'anions sulfate et/ou sulfite et le traitement de maturation subséquent ont pour fonction de former une couche de sulfate métallique insoluble dans l'eau, le long d'une face au moins de la membrane échangeuse d'ions traitée. Les quantités respectives des deux solutions sont dès lors interdépendantes et dépendent de divers paramètres, en particulier des cations métalliques sélectionnés (notamment leur valence) et des concentrations respectives des deux solutions, et elles peuvent être déterminées aisément dans chaque cas particulier par une analyse de routine au laboratoire. En pratique, on a intérêt à mettre en oeuvre un excès d'anions sulfate et/ou sulfite par rapport à la quantité théorique nécessaire pour former le sulfate et/ou sulfite métallique. Le traitement de maturation a pour fonction d'assurer la précipitation du sulfate et/ou sulfite métallique et la formation du gel. Il est généralement réalisé à une température supérieure à la température ambiante, par exemple de 65 à 90 °C, pendant un temps supérieur à une heure, généralement au moins égal à 3 heures. En principe, il n'existe pas de limite supérieure à la durée du traitement de maturation; en pratique, pour des considérations de nature économique, celle-ci est généralement inférieure à 100 heures et excède rarement 50 heures.

Dans cette première forme d'exécution du procédé selon l'invention, les traitements successifs de la membrane échangeuse d'ions avec la solution aqueuse de cations métalliques puis la solution aqueuse d'anions sulfate et/ou sulfite peuvent par exemple être réalisés par immersion de la membrane dans un bain de la solution ou par projection de celle-ci, à l'état pulvérisé, sur une face de la membrane échangeuse d'ions.

Le traitement de maturation peut être suivi d'un lavage de la membrane échangeuse d'ions. On préfère toutefois, selon l'invention, éviter expressément de traiter la membrane échangeuse d'ions avec de l'eau pure, après qu'elle ait été traitée avec la solution de cations métalliques et/ou avec la solution d'anions sulfate et/ou sulfite.

A l'issue du traitement avec la solution aqueuse d'anions sulfate et/ou sulfite, on juxtapose les deux membranes échangeuses d'ions l'une contre l'autre. Les deux membranes échangeuses d'ions sont de préférence juxtaposées à l'état humide, en prenant soin d'éviter la formation de poches d'air entre elles. Pour juxtaposer les deux membranes échangeuses d'ions, il suffit généralement de les appliquer l'une contre l'autre, sans pression. En variante, on peut appliquer les deux membranes sous pression, mais ce n'est pas souhaitable. La juxtaposition des deux membranes échangeuses d'ions peut être exécutée à la température ambiante ou à haute température, à condition que celle-ci reste inférieure à la température de dégradation thermique de la membrane anionique ou de la membrane cationique.

Dans une variante de réalisation de la première forme d'exécution susdite du procédé selon l'invention, qui est spécialement avantageuse, la formation du gel hydraté de sulfate et/ou sulfite métallique est réalisée après avoir juxtaposé les deux membranes échangeuses d'ions, par dissociation électrochimique d'eau le long de la surface commune de jonction des deux membranes échangeuses d'ions. Dans cette variante de réalisation avantageuse de l'invention, la conversion du sulfate et/ou sulfite métallique en gel peut être exécutée a postériori, au moment de l'exploitation de la membrane bipolaire dans un procédé d'électrodialyse d'électrolytes aqueux.

Dans une autre variante de réalisation de la première forme d'exécution susdite du procédé selon l'invention, la solution de cations métalliques est une solution aqueuse de chrome trivalent contenant des cations de métaux alcalino-terreux à l'état de traces. Dans cette variante de réalisation du procédé selon l'invention, la quantité de chrome trivalent dans la solution aqueuse de cations métalliques est avantageusement au moins égale à 50 (de préférence 80) % molaire de la quantité correspondant à la saturation à la température ambiante. On entend désigner par traces de cations de métaux alcalino-terreux une quantité n'excédant pas 10 moles pour cent de cations de chrome. Les cations de métal alcalino-terreux sont de préférence en une quantité au moins égale à 0,5 (de préférence à 1) mole pour 100 moles de cations du chrome, les valeurs de 1 à 2 moles pour 100 moles de cations du chrome étant spécialement recommandées. Toutes autres choses égales par ailleurs, les membranes bipolaires obtenues au moyen de cette variante de réalisation du procédé selon l'invention, présentent une tension minimum de dissociation de l'eau. Le métal alcalino-terreux est de préférence le calcium ou le magnésium, le magnésium s'étant révélé spécialement avantageux.

Selon une deuxième forme d'exécution du procédé suivant l'invention, on traite la membrane échangeuse d'ions avec une solution unique contenant les cations métalliques et des anions sulfate et/ou sulfite et on soumet la membrane à une maturation dans ladite solution. Les conditions opératoires concernant le traitement de la membrane échangeuse d'ions avec la solution de cations métalliques et d'anions sulfate et/ou sulfite et le traitement de maturation sont similaires à celles énoncées plus haut, en référence à la première forme d'exécution du procédé selon l'invention.

La membrane bipolaire recueillie à l'issue du procédé selon l'invention doit de préférence être conservée à l'état humide, avant son utilisation dans une cellule d'électrodialyse.

La membrane bipolaire selon l'invention est bien adaptée à la décomposition électrochimique de l'eau et elle peut dès lors être utilisée dans les techniques d'électrodialyse mettant en oeuvre des solutions aqueuses. Elle trouve ainsi une utilisation dans la fabrication d'acides et de bases au départ de leurs sels. Elle trouve une application particulièrement intéressante pour la fabrication de solutions aqueuses d'hydroxyde de métal alcalin (spécialement d'hydroxyde de sodium) par électrodialyse de solutions aqueuses de sels de métaux alcalins, tels que du chlorure, du carbonate ou du sulfate de métal alcalin.

L'invention concerne dès lors également un procédé de fabrication d'une solution aqueuse d'hydroxyde de métal alcalin par électrodialyse d'une solution aqueuse d'un sel de métal alcalin, selon lequel on exécute l'électrodialyse en présence d'une membrane bipolaire conforme à l'invention, définie plus haut.

L'invention s'applique spécialement à la fabrication de solutions aqueuses d'hydroxyde de sodium par électrodialyse de solutions aqueuses de chlorure de sodium, par exemple au moyen de la technique décrite dans le brevet US-A-4238305.

Les exemples qui suivent servent à illustrer l'invention.

### Exemple 1 (exemple de référence, non conforme à l'invention)

On a fabriqué une membrane bipolaire au départ d'une membrane cationique MORGANE CDS et d'une membrane anionique MORGANE ADP. A cet effet, on a mis en oeuvre une solution aqueuse contenant 20 % en poids de nitrate chromique nonahydraté et du calcium en une quantité environ égale à 0,2 mole pour 100 moles d'ions chrome. On a immergé les deux membranes échangeuses d'ions dans cette solution à 25 °C, pendant 20 heures. On a ensuite retiré les deux membranes de la solution, puis on les a immergées immédiatement dans une solution aqueuse contenant 10 % en poids d'hydroxyde de sodium à 70 °C, pendant environ 18 heures. A l'issue du traitement dans la solution d'hydroxyde de sodium, la membrane cationique et la membrane anionique ont été appliquées l'une contre l'autre, à l'état humide, sous une pression d'environ 78 MPa, à la température ambiante.

Pour évaluer les performances de la membrane bipolaire ainsi obtenue, on a disposé celle-ci verticalement dans une cellule de mesure de laboratoire, entre une anode et une cathode en argent. La membrane bipolaire a été disposée dans la cellule d'électrodialyse, de telle sorte que sa face anionique soit dirigée vers l'anode, sa face cationique étant dirigée vers la cathode. On a ainsi délimité deux chambres dans la cellule, que l'on a rempli d'une solution aqueuse de chlorure de sodium (0,1 mole/l). On a imposé une tension électrique réglée entre l'anode et la cathode, de manière à réaliser une densité de courant d'électrodialyse de 100 mA par cm² de surface de la membrane bipolaire, et on a mesuré, au moyen de capillaires de Luggin, la différence de potentiel entre les deux faces de la membrane bipolaire. Celle-ci s'est stabilisée à une valeur voisine de 1,4 V.

### Exemple 2 (conforme à l'invention)

On a répété l'essai de l'exemple 1, en substituant, à la solution aqueuse d'hydroxyde de sodium, une solution aqueuse de sulfate de sodium (Na₂SO₄) (2 moles/l de solution) à 80 °C. On a mesuré la différence de potentiel entre les deux faces de la membrane bipolaire, de la manière et dans les conditions exposées à l'exemple 1. Celle-ci s'est stabilisée à environ 1,0 V.

### Exemple 3 (conforme à l'invention)

On a répété l'ensemble des conditions opératoires de l'exemple 2, à la seule différence qu'à l'issue du traitement avec la solution de sulfate de sodium, on a soumis les deux membranes échangeuses d'ions à un lavage avec de l'eau déminéralisée. Par ailleurs, la juxtaposition des deux membranes a été opérée sous une pression de 78 MPa à 150 °C. La différence de potentiel entre les deux faces de la membrane bipolaire s'est stabilisée à environ 1,0 V.

### Exemple 4 (conforme à l'invention)

On a répété l'essai de l'exemple 2, à la seule différence que, pour juxtaposer les deux membranes échangeuses d'ions, on les a appliquées l'une contre l'autre, sans exercer de pression. La différence de potentiel mesurée s'est stabilisée à 1,0 V.

### Exemple 5 (conforme à l'invention)

On a répété l'essai de l'exemple 4, en y apportant les modifications suivantes :
- la solution de nitrate chromique nonohydraté utilisée fut exempte de calcium;
- la concentration de la solution aqueuse de sulfate de sodium fut de 1 mole de sulfate de sodium par litre de solution;
- la température de la solution aqueuse de sulfate de sodium fut égale à 85 °C.

La différence de potentiel de la membrane bipolaire obtenue a été mesurée de la manière exposée à l'exemple 1 : 0,9 V

### Exemple 6 (conforme à l'invention)

On a répété l'essai de l'exemple 5, en y apportant les modifications suivantes :
- à la solution de sulfate de sodium, on a substitué une solution aqueuse de sulfite de sodium (Na₂SO₃) (concentration : 1 mole de sulfite de sodium par litre de solution);
- la température de la solution de sulfite de sodium fut maintenue à 80 °C.

La membrane bipolaire a révélé une différence de potentiel égale à 1,3 V.

### Exemple 7 (conforme à l'invention)

A une solution aqueuse de sulfate de sodium (1 mole de sulfate de sodium par litre de solution), on a ajouté du nitrate de chrome nonohydraté en une quantité équivalente à 50 g de ce composé pour 100 cm³ de la solution résultante.

Une membrane cationique MORGANE CDS et une membrane anionique MORGANE ADP ont été immergées dans la solution ainsi obtenue, maintenue à 85 °C, pendant 24 heures. Les deux membranes ont ensuite été retirées de la solution et on les a appliquées l'une contre l'autre, à l'état humide, sans exercer de pression.

Pour évaluer les performances de la membrane bipolaire ainsi obtenue, on l'a soumise à l'essai d'électrodialyse décrit à l'exemple 1. La différence de potentiel entre les deux faces de la membrane bipolaire s'est stabilisée à 1,2 V.

### Exemple 8 (non conforme à l'invention)

On a répété l'essai de l'exemple 1, en utilisant une membrane cationique RAIPORE R-4010 et une membrane anionique RAIPORE R-1030. Dans cet exemple, la juxtaposition des deux membranes échangeuses d'ions a été exécutée sans exercer de pression. La différence de potentiel entre les deux faces de la membrane bipolaire, mesurée de la manière et dans les conditions exposées à l'exemple 1, s'est stabilisée à environ 1,3 V.

### Exemple 9 (conforme à l'invention)

On a répété l'essai de l'exemple 8 en substituant, à la solution aqueuse d'hydroxyde de sodium, une solution aqueuse de sulfate de sodium (Na₂SO₄) dans les conditions de l'exemple 2. On a mesuré la différence de potentiel entre les deux faces de la membrane bipolaire, de la manière et dans les conditions exposées à l'exemple 1. Celle-ci s'est stabilisée à environ 0,8 V.

Une comparaison des résultats des exemples 2, 3, 4, 5, 6, 7 et 9 (conformes à l'invention) avec ceux des exemples 1 et 8 (non conformes à l'invention) montre le progrès apporté par l'invention.

## Revendications

1. Membrane bipolaire utilisable pour l'électrodialyse d'électrolytes aqueux, comprenant deux membranes échangeuses d'ions, respectivement anionique et cationique, qui sont juxtaposées le long d'une surface commune, caractérisée en ce qu'elle comprend, le long de ladite surface commune. un gel à base de sulfate et/ou sulfite métallique hydraté, contenant moins de 0,01% de gel d'indium, de cérium, de manganèse ou de cuivre.

2. Membrane bipolaire selon la revendication 1, caractérisée en ce que le sulfate et/ou sulfite métallique est du monosulfate et/ou du monosulfite métallique.

3. Membrane selon la revendication 2, caractérisée en ce que le gel est à base de monosulfate métallique hydraté.

4. Membrane bipolaire selon l'une quelconque des revendications 1 à 3, caractérisée en ce que le gel est situé, au moins partiellement, dans la membrane échangeuse d'ions anionique.

5. Membrane bipolaire selon l'une quelconque des revendications 1 à 4, caractérisée en ce que le sulfate et/ou sulfite métallique comprend du sulfate et/ou sulfite de chrome.

6. Procédé de fabrication d'une membrane bipolaire conforme à l'une quelconque des revendications 1 à 5, selon lequel on met en oeuvre deux membranes échangeuses d'ions, respectivement anionique et cationique, on traite une au moins des membranes échangeuses d'ions avec des cations métalliques, puis on juxtapose les deux membranes échangeuses d'ions le long d'une surface commune de jonction, caractérisé en ce que le traitement de la membrane échangeuse d'ions avec les cations métalliques comprend la formation d'un gel à base de sulfate et/ou sulfite métallique hydraté le long d'une partie au moins de la surface commune de jonction précitée, contenant moins de 0,01% de gel de sulfate d'indium, de cérium, de manganèse ou de cuivre.

7. Procédé selon la revendication 6, caractérisé en ce que, pour former le gel, on forme d'abord un précipité de sulfate et/ou sulfite métallique que l'on convertit ensuite en gel hydraté.

8. Procédé selon la revendication 7, caractérisé en ce que, pour convertir le précipité en gel, on procéde à la dissociation électrochimique d'eau le long de la surface commune de jonction précitée, après avoir juxtaposé les deux membranes échangeuses d'ions.

9. Procédé selon la revendication 7 ou 8, caractérisé en ce que, pour former le précipité, on traite la membrane échangeuse d'ions successivement avec une solution aqueuse comprenant les cations métalliques précités et avec une solution aqueuse comprenant des anions sulfate et/ou sulfite et on soumet ensuite le précipité à une maturation dans la solution aqueuse d'anions sulfate et/ou sulfite.

10. Procédé selon la revendication 9, caractérisé en ce que la solution de cations métalliques est une solution aqueuse de nitrate de chrome trivalent nonahydraté.

11. Procédé selon la revendication 9 ou 10, caractérisé en ce que la solution aqueuse de cations métalliques comprend des cations du chrome trivalent et des cations de métal alcalino-terreux en une quantité de 1 à 2 moles pour 100 moles de cations du chrome.

12. Procédé selon l'une quelconque des revendications 9 à 11, caractérisé en ce que la membrane échangeuse d'ions que l'on traite avec la solution aqueuse de cations métalliques et avec la solution aqueuse d'anions sulfate et/ou sulfite est la membrane anionique.

13. Procédé selon l'une quelconque des revendications 9 à 11, caractérisé en ce que la membrane échangeuse d'ions anionique et la membrane échangeuse d'ions cationique sont traitées avec la solution de cations métalliques et avec la solution d'anions sulfate et/ou sulfite.

14. Procédé selon la revendication 7 ou 8, caractérisé en ce que, pour former le précipité, on traite la membrane échangeuse d'ions avec une solution aqueuse comprenant les cations métalliques précités et des anions sulfate et/ou sulfite et on soumet ensuite le précipité à une maturation dans ladite solution aqueuse.

15. Procédé de fabrication d'une solution aqueuse d'hydroxyde de métal alcalin par électrodialyse d'une solution aqueuse d'un sel de métal alcalin, selon lequel on exécute l'électrodialyse en présence d'une membrane bipolaire conforme à l'une quelconque des revendications 1 à 5.

## Patentansprüche

1. Bipolare Membran, die für die Elektrodialyse von wässerigen Elektrolyten verwendbar ist, mit zwei Ionenaustauschmembranen, nämlich einer anionischen und einer kationischen Membran, die über eine gemeinsame Oberfläche miteinander verbunden sind, dadurch gekennzeichnet, daß sie auf der gemeinsamen Oberfläche ein Gel auf der Basis von hydratisiertem Metallsulfat und/oder Metallsulfit aufweist, das weniger als 0,01% Gel aus Indium, Cerium, Mangan oder Kupfer enthält.

2. Bipolare Membran gemäß Anspruch 1, dadurch gekennzeichnet, daß das Metallsulfat und/oder Metallsulfit Metallmonosulfat und/oder Metallmonosulfit ist.

3. Bipolare Membran gemäß Anspruch 2, dadurch gekennzeichnet, daß das Gel ein Gel auf der Basis von hydratisiertem Metallmonosulfat ist.

4. Bipolare Membran gemäß irgendeinem der Ansprüche 1 bis 3, dadurch gekennzeichnet, daß das Gel zumindest teilweise in der anionischen Ionenaustauschmembran gelegen ist.

5. Bipolare Membran gemäß irgendeinem der Ansprüche 1 bis 4, dadurch gekennzeichnet, daß das Metallsulfat und/oder Metallsulfit chromsulfat und/oder Chromsulfit aufweist.

6. Verfahren zur Herstellung einer bipolaren Membran gemäß irgendeinem der Ansprüche 1 bis 5, bei dem zwei Ionenaustauschmembranen, nämlich eine anionische und eine kationische Membran, verwendet werden, mindestens eine der Ionenaustauschmembranen mit metallischen Kationen behandelt wird, und die zwei Ionenaustauschmembranen dann über eine gemeinsame Verbindungsfläche miteinander verbunden werden, dadurch gekennzeichnet, daß die Behandlung der Ionenaustauschmembran mit den metallischen Kationen die Bildung eines Gels auf der Basis von hydratisiertem Metallsulfat und/oder Metallsulfit auf mindestens einem Teil der obenerwähnten gemeinsamen Verbindungsfläche aufweist, wobei das Gel weniger als 0,01% Gel aus Sulfat von Indium, Cerium, Mangan oder Kupfer enthält.

7. Verfahren gemäß Anspruch 5, dadurch gekennzeichnet, daß zur Bildung des Gels zunächst ein Niederschlag von Metallsulfat und/oder Metallsulfit gebildet wird, der danach in ein hydratisiertes Gei imgewandelt wird.

8. Verfahren gemäß Anspruch, 7, dadurch gekennzeichnet, daß zur Umwandlung des Niederschlags in ein Gel eine elektrochemische Dissoziation von Wasser auf der obenerwähnten gemeinsamen Verbindungsfläche vorgenommen wird, nachdem die zwei Ionenaustauschmenbranen miteinander verbunden wurden.

9. Verfahren gemäß Anspruch 7 oder 8, dadurch gekennzeichnet, daß zur Bildung des Niederschlags die Ionenaustauschmembran nacheinander mit einer wässerigen Lösung, die die obenerwähnten metallischen kationen aufweist, und mit einer wässerigen Lösung, die Sulfat- und/oder Sulfitanionen aufweist, behandelt wird, und der Niederschlag danach einer Reifung in der wässerige Lösung von Sulfat- und/oder sulfitanionen unterworfen wird.

10. Verfahren gemäß Anspruch 9, dadurch gekennzeichnet, daß die Lösung von metallischen Kationen eine wässerige Lösung von nonahydratisiertem, dreiwertigem Chromnitrat ist.

11. Verfahren gemäß Anspruch 9 oder 10, dadurch gekennzeichnet, daß die wässerige Lösung von metallischen Kationen Kationen des dreiwertigen Chroms, und Kationen eines Erdalkalimetalls in einer Menge von 1 bis 2 Mol pro 100 Mol Kationen des Chroms aufweist.

12. Verfahren gemäß irgendeinem der Ansprüche 3 bis 11, dadurch gekennzeichnet, daß die Ionenaustauschmembran, die mit der wässerigen Lösung von metallischen Kationen und mit der wässerigen Lösung von Sulfat- und/oder Sulfitanionen behandelt wird, die anionische Membran ist.

13. Verfahren gemäß irgendeinem der Ansprüche 9 bis 11, dadurch gekennzeichnet, daß die anionische Ionenaustauschmembran und die kationische Ionenaustauschmembran mit der Lösung von metallischen Kationen und mit der Lösung von Sulfat- und/oder Sulfitanionen behandelt werden.

14. Verfahren gemäß Anspruch oder 8, dadurch gekennzeichnet, daß zur Bildung des Niederschlags die Ionenaustauschmembran mit einer wässerigen Lösung behandelt wird, die die obenerwähnten metallischen Kationen und Sulfat- und/oder Sulfitanionen aufweist, und der Niederschlag danach einer Reifung in der wässerigen Lösung unterworfen wird.

15. Verfahren zur Herstellung einer wässerigen Lösung von Alkalimetallhydroxid durch Elektrodialyse einer wässerigen Lösung eines Alkalimetallsalzes, bei dem die Elektrodialyse bei Anwesenheit einer bipolaren Membran gemäß irgendeinem der Ansprüche 1 bis 5 ausgeführt wird.

## Claims

1. Bipolar membrane which can be used for the electrodialysis of aqueous electrolytes, comprising two ion exchange membranes, anionic and cationic respectively, which are juxtaposed along a common surface, characterised in that it comprises, along said common surface, a gel based on hydrated metal sulphate and/or sulphite containing less than 0.01% of indium, cerium, manganese or copper sulphate gel.

2. Bipolar membrane according to claim 1, characterised in that the metal sulphate and/or sulphite is metal monosulphate and/or monosulphite.

3. Bipolar membrane according to claim 2, characterised in that the gel is based on hydrated metal monosulphate.

4. Bipolar membrane according to any one of the claims 1 to 3, characterised in that the gel is located at least partially in the anionic ion exchange membrane.

5. Bipolar membrane according to any one of the claims 1 to 4, characterised in that the metal sulphate and/or sulphite comprises chromium sulphate and/or sulphite.

6. Method for manufacturing a bipolar membrane according to any one of the claims 1 to 5, according to which two ion exchange membrane, anionic and cationic respectively, are employed, at leas one of the ion exchange membranes is treated with metal cations and the two ion exchange membranes are then juxtaposed along a common junction surface, characterised in that the treatment of the ion exchange membrane with metal cations comprises the formation of a gel based on hydrated metal sulphate and/or sulphite along at least one portion of the above-mentioned common junction surface, containing less than 0.01% of indium, cerium, manganese or copper sulphate gel.

7. Method according to claim 6, characterised in that, to form the gel, a precipitate of metal sulphate and/or sulphite is formed first, and is then converted to hydrated gel.

8. Method according to claim 7, characterised in that to convert the precipitate to gel, electrochemical dissociation of water is effected along the above-mentioned common junction surface after the two ion exchange membranes have been juxtaposed.

9. Method according to claim 7 or 8, characterised in that, to form the precipitate, the ion exchange membrane is treated successively with an aqueous solution comprising the above-mentioned metal cations and with an aqueous solution comprising sulphate and/or sulphite anions, and the precipitate is then subjected to a maturation in the aqueous solution of sulphate and/or sulphite anions.

10. Method according to claim 9, characterised in that the solution of metal cations is an aqueous solution of nonahydrated trivalent chromium nitrate.

11. Method according to claim 9 or 10, characterised in that the aqueous solution of metal cations comprises trivalent chromium cations and alkaline-earth metal cations in an amount from 1 to 2 mol per 100 mol of chromium cations.

12. Method according to any one of the claims 9 to 11, characterised in that the ions exchange membrane which is treated with the aqueous solution of metal cations and with the aqueous solution of sulphate and/or sulphite anions is the anionic membrane.

13. Method according to any one of the claims 9 to 11, characterised in that the anionic ion exchange membrane and the cationic ion exchange membrane are treated with the solution of metal cations and with the son of sulphate and/or sulphite anions.

14. Method according to claim 7 or 8, characterised in that, to form the precipitate, the ion exchange membrane is treated with an aqueous solution comprising the above-mentioned metal cations and sulphate and/or sulphite anions, and the precipitate is then subjected to a maturation in said aqueous solution.

15. Method for manufacturing an aqueous solution of alkali metal hydroxide by electrodialysis of an aqueous solution of an alkali metal salt, according to which the electrodialysis is performed in the presence of a bipolar membrane according to any of the claims 1 to 5.
